# EUROPÄISCHE PATENTANMELDUNG

(11) **EP 4 369 592 A1**
(43) Veröffentlichungstag der Anmeldung: **15.05.2024**
(21) Anmeldenummer: 23208337.8
(22) Anmeldetag: 07.11.2023
(51) Int. Cl.: H02P 25/22, H01R 29/00, H02K 5/22

(54) **ELEKTRISCHE ANTRIEBSEINHEIT FÜR EIN LUFTFAHRZEUG**

(30) Priorität: 08.11.2022 DE 102022129504
(71) Anmelder: Rolls-Royce Deutschland Ltd & Co KG, 15827 Blankenfelde-Mahlow (DE)
(72) Erfinder: FILIPOVIC, Damir, 15827 Blankenfelde-Mahlow (DE); THESING, Stephan, 15827 Blankenfelde-Mahlow (DE)

(57) **Zusammenfassung**

Eine elektrische Antriebseinheit (1; 1') für ein Luftfahrzeug (2; 2'), umfasst einen Elektromotor (10), ein Steuerungssystem (11) mit einem Speicher (110), in welchem mindestens zwei verschiedene Konfigurationen gespeichert sind, und einen Steckverbinder (12), der mit einem Gegensteckverbinder (13A-13C) verbindbar ist, wobei das Steuerungssystem (11) dazu eingerichtet ist, eine Identifikation am Steckverbinder (12) auszulesen, basierend auf der Identifikation eine Konfiguration der mindestens zwei Konfigurationen auszuwählen und den Elektromotor (10) unter Anwendung der ausgewählten Konfiguration zu betreiben.

## Beschreibung

Die vorliegende Offenbarung bezieht sich insbesondere auf eine elektrische Antriebseinheit für ein Luftfahrzeug, auf ein System mit mehreren solchen elektrischen Antriebseinheiten und auf ein Luftfahrzeug mit zumindest einer solchen elektrischen Antriebseinheit.

Luftfahrzeuge werden in vielfältigen Ausgestaltungen angetrieben. Verbrennungsmaschinen, z.B. Kolbenmotoren oder Gasturbinentriebwerke, ermöglichen große Reichweiten und hohe Geschwindigkeiten. Antriebe mit einem oder mehreren Elektromotor(en) ermöglichen einen Einsatz von nachhaltig erzeugter Energie und sind mitunter besonders wartungsarm und leise. Fortschritte in der Batterietechnologie ermöglichen immer weitere Einsatzbereiche von elektrischen Antrieben.

Elektrisch angetriebene Luftfahrzeuge, insbesondere vertikal startende und landende Luftfahrzeuge (auch abgekürzt als eVTOL), werden oftmals mit einer größeren Anzahl an Antriebseinheiten ausgestattet als beispielsweise Luftfahrzeuge mit einer oder mehreren Gasturbinen als Antrieb. Beispielsweise können eVTOLs acht oder zehn separate Antriebseinheiten aufweisen. Diese werden oftmals an ihre Einbauposition angepasst ausgebildet. Beispielsweise kann ein unterschiedlicher Drehsinn notwendig sein, je nach Ausrichtung an der jeweiligen Einbauposition. Dies führt allerdings zu einer großen Anzahl an unterschiedlich ausgestaltet und/oder konfigurierten Antriebseinheiten, was in vielen Fällen auch mit einer erhöhten Wahrscheinlichkeit für Fehler einhergeht, insbesondere bei einer Verkabelung der Antriebseinheiten.

Die DE 41 08 426 A1 betrifft eine Vorrichtung zum Umschalten der Drehzahl eines Elektromotors mit einem Stecker, der in unterschiedlichen Stellungen mit der Steckeraufnahme des Elektromotors verbindbar ist und hierbei je nach seiner Einsteckstellung unterschiedliche Schaltungen der Motorenwicklungen und damit unterschiedliche Motorendrehzahlstufen erzeugt.

In der CA 2292228 A1 ist ein Stecker beschrieben, der in unterschiedlichen Positionen an eine Antriebseinheit steckbar ist, um verschiedene Betriebsbedingungen einzustellen. Eine weitere Lösung ist in der US 5,017,818 A beschrieben.

Die bekannten Lösungen sind jedoch in den Möglichkeiten ihrer Anwendung beschränkt.

Aufgabe der vorliegenden Erfindung ist es, eine möglichst flexibel einsetzbare elektrische Antriebseinheit bereitzustellen.

Gemäß einem Aspekt wird eine elektrische Antriebseinheit bereitgestellt, insbesondere für ein Luftfahrzeug. Die elektrische Antriebseinheit umfasst einen Elektromotor, ein Steuerungssystem mit einem Speicher und einen Steckverbinder. Der Steckverbinder ist mit einem Gegensteckverbinder verbindbar. In dem Speicher sind mindestens zwei verschiedene Konfigurationen gespeichert. Die gespeicherten Konfigurationen können z.B. durch einen Prozessor der elektrischen Antriebseinheit auslesbar sein. Dabei ist vorgesehen, dass das Steuerungssystem dazu eingerichtet ist, eine Identifikation am Steckverbinder auszulesen, basierend auf der Identifikation eine Konfiguration der mindestens zwei Konfigurationen auszuwählen und den Elektromotor unter Anwendung der ausgewählten Konfiguration zu betreiben.

Das basiert auf der Erkenntnis, dass die elektrische Antriebseinheit auf diese Weise besonders einfach und flexibel an verschiedene Anwendungen, insbesondere an verschiedene mögliche Einbaupositionen an einem Luftfahrzeug angepasst werden kann, indem ein entsprechender Gegensteckverbinder an den Steckverbinder angesteckt wird. Durch Auslesen des Steckverbinders erkennt das Steuerungssystem, welche der mehreren gespeicherten Konfigurationen ausgewählt ist. Dies kann in besonders einfacher Weise erfolgen, indem ein Potential an einem einer Konfiguration zugeordneten Kontakt des Steckverbinders anliegt. Alternativ kann die Auswahl über ein an den Kontakten anliegendes Muster erfolgen. Ferner kann die Auswahl über eine Datenübertragung einer Identifikation über den Steckverbinder erfolgen. Dies kann beispielsweise durch ein Bauteil (etwa ein I2C EEPROM) im Steckverbinder erfolgen, oder über einen Kommunikationskanal, z.B. aus einem Cockpit heraus. So kann eine Vielzahl an verschiedenen Konfigurationen in einfacher Weise ausgewählt werden. Dabei wird jedoch nicht die Konfiguration an sich über den Steckverbinder übermittelt, sondern nur eine Identifikation einer vorab im Speicher gespeicherten Konfiguration. Das ermöglicht, baugleich ausgebildete elektrische Antriebseinheiten an mehreren Positionen und/oder in mehreren Anwendungen einzusetzen, während viele beim Einbau üblicherweise vorhandene Fehlerquellen ausgeräumt werden können. So können insbesondere eVTOLs mit einer verhältnismäßig großen Anzahl an elektrischen Antriebseinheiten besonders einfach hergestellt werden.

Die mindestens zwei Konfigurationen können jeweils einen Wert oder mehrere Werte für einen oder mehrere Betriebsparameter umfassen. So können in einfacher Weise Anpassungen an bestimmte Anwendungen, insbesondere an bestimmte Einbaupositionen vorgenommen werden.

Der oder die Betriebsparameter können eine Drehrichtung, eine maximale Leistung, eine maximale Beschleunigung, einen Parameter eines Reglers und/oder einen Parameter einer einstellbaren Fläche, wie etwa ein Rotorblatt mit einstellbarem Blattwinkel, umfassen. Dies erlaubt eine besonders effiziente Einstellung in besonders einfacher Weise.

Die elektrische Antriebseinheit kann ferner einen Wechselrichter umfassen. Das Steuerungssystem ist optional dazu eingerichtet, den Wechselrichter gemäß der ausgewählten Konfiguration einzustellen. Das erlaubt einen präzise an den jeweiligen Einsatzort angepassten Betrieb.

Der Elektromotor kann mehrere parallele und unabhängig voneinander mit Strom beaufschlagbare Stränge mit Drahtwicklungen umfassen, insbesondere mehrere voneinander unabhängige Dreiphasen-Wicklungssysteme. Dabei können die mindestens zwei Konfigurationen verschiedene Werte in Bezug auf die jeweiligen Stränge umfassen. Das ermöglicht weitreichende Konfigurationen in besonders einfacher Weise. Zum Beispiel kann in einer bestimmten Einbauposition ein Strang im Normalbetrieb deaktiviert werden. An einer anderen Einbauposition werden demgegenüber alle Stränge aktiviert.

Der Steckverbinder kann dazu ausgebildet sein, den Gegensteckverbinder mit Strom zu versorgen. So kann der Gegensteckverbinder besonders einfach ausgestaltet sein. Beispielsweise ist der Gegensteckverbinder ein Blindstecker, welcher lediglich je nach auszuwählender Konfiguration bestimmte Kontakte des Steckverbinders miteinander elektrisch verbindet. Alternativ weist der Gegensteckverbinder eine Elektronik und optional auch einen Prozessor auf, wobei der Gegensteckverbinder über den Steckverbinder eine Identifikation an das Steuerungssystem kommuniziert.

Die mindestens zwei Konfigurationen können jeweils eine Identifikation aufweisen, z.B. eine Nummer, und das Steuerungssystem kann dazu ausgebildet sein, eine über den Steckverbinder eingegebene Identifikation auszulesen. Das erlaubt eine große Anzahl von auswählbaren Konfigurationen auch bei einem einfach aufgebauten Steckverbinder.

Der Steckverbinder kann mehrere Kontakte aufweisen, die durch entsprechende Gegenkontakte des Gegensteckverbinders kontaktierbar sind, z.B. elektrisch und/oder optisch. So kann die Auswahl verlässlich und effizient übermittelt werden.

Optional ist das Steuerungssystem dazu ausgebildet, basierend auf an den Kontakten des Steckverbinders anliegenden Spannungen und/oder basierend auf über die Kontakte übertragenen Daten die Konfiguration der mindestens zwei Konfigurationen auszuwählen. So kann schnell und verlässlich die Konfiguration ausgewählt werden.

Die elektrische Antriebseinheit kann ferner den Gegensteckverbinder umfassen. Optional werden mehrere verschiedene Gegensteckverbinder bereitgestellt und die Auswahl des an den Steckverbinder gesteckten Gegensteckverbinders führt zur Auswahl der Konfiguration.

Der Gegensteckverbinder kann insbesondere eine Einbauposition angeben, insbesondere eine von mehreren vorbestimmten Einbaupositionen. So können baugleiche elektrische Antriebsvorrichtungen an verschiedenen Positionen eingesetzt werden.

Der Gegensteckverbinder kann in besonders einfacher Ausgestaltung miteinander elektrisch verbundene Kontakte aufweisen. Das Steuerungssystem kann auslesen, welche der Gegenkontakte miteinander elektrisch verbunden sind, um eine dieser Verbindung zugewiesene Konfiguration auszuwählen.

Optional ist der Gegensteckverbinder zum Eingeben einer Identifikation an den Steckverbinder mit einer Eingabevorrichtung gekoppelt. Das erlaubt weitere Möglichkeiten bei der Auswahl der Konfiguration, die auf diese Weise auch dynamisch angepasst werden kann, z.B. im laufenden Betrieb angepasst werden kann.

Gemäß einem Aspekt wird ein System bereitgestellt, umfassend mehrere, insbesondere baugleiche, elektrische Antriebseinheiten, jeweils nach einer beliebigen, hierin beschriebenen Ausgestaltung. Dabei sind die elektrischen Antriebseinheiten in Abhängigkeit von ihren jeweiligen Einbaupositionen mittels entsprechenden, für die jeweilige Einbauposition spezifischen Gegensteckverbindern konfiguriert. Hinsichtlich der Vorteile wird auf die obigen Angaben Bezug genommen.

Gemäß einem Aspekt wird ein Luftfahrzeug bereitgestellt, umfassend die elektrische Antriebseinheit und/oder das System nach einer beliebigen, hierin beschriebenen Ausgestaltung. Die elektrische Antriebseinheit erzeugt Schub und/oder Auftrieb für das Luftfahrzeug. Bei einem Luftfahrzeug kommen die oben genannten Vorteile besonders zum Tragen.

Der Gegensteckverbinder kann zum Eingeben einer Identifikation an den Steckverbinder mit einer in einem Cockpit des Luftfahrzeugs angeordneten Eingabevorrichtung elektrisch verbunden sein. Das erlaubt weitere Möglichkeiten bei der Auswahl der Konfiguration, die auf diese Weise auch dynamisch angepasst werden kann, z.B. im laufenden Betrieb. Zum Beispiel könnten unterschiedliche Missions-Konfigurationen gespeichert werden, z.B. eine, die verhältnismäßig energiesparender ist, insbesondere als eine andere ebenfalls gespeicherte Missions-Konfiguration, z.B. mit (absichtlich) reduzierter Manövrierbarkeit und/oder Leistung (und damit einer größeren Reichweite mit einer Batterieladung). Wenn anstatt des Gegensteckverbinders oder zusätzlich dazu Signale z.B. vom Cockpit empfangen werden, kann der Pilot eine dieser Konfigurationen anhand der geplanten Mission auswählen. Optional kann der Gegensteckverbinder mit einer (z.B. im Cockpit oder an einem dem Piloten nicht zugänglichen Ort angeordneten) Komponente wirkverbunden sein, über welche die Konfiguration des Flugzeugtyps aus einer Flugzeugfamilie ausgewählt und unveränderlich gehalten wird.

Das Luftfahrzeug kann mehrere elektrische Antriebseinheiten umfassen, wodurch die obigen Vorteile wiederum besonders zum Tragen kommen.

Es werden nun beispielhaft Ausführungsformen mit Bezug auf die Figuren beschrieben; in den Figuren zeigen in schematischen Darstellungen:
- Figur 1: ein Luftfahrzeug in Form eines eVTOL-Flugzeugs mit mehreren elektrisch angetriebenen Rotoreinheiten;
- Figur 2: ein Luftfahrzeug in Form eines Flugzeugs mit einer elektrisch angetriebenen Rotoreinheit;
- Figur 3: ein elektrisches Antriebssystem des Luftfahrzeugs gemäß Figur 1 und des Luftfahrzeugs gemäß Figur 2;
- Figur 4: ein elektrisches Antriebssystem für das Luftfahrzeug gemäß Figur 1 und das Luftfahrzeug gemäß Figur 2;
- Figur 5: ein System mit mehreren elektrischen Antriebseinheiten; und
- Figur 6: weitere Details einer elektrischen Antriebseinheit.

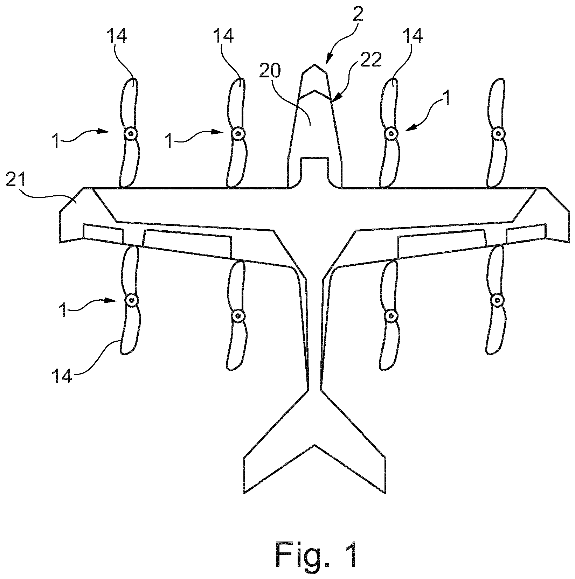

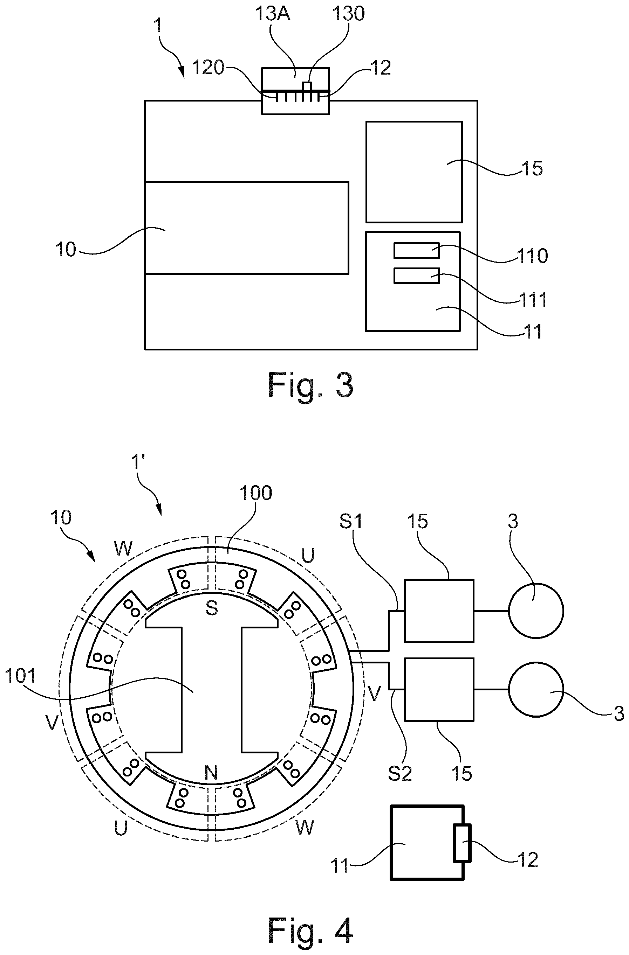

Figur 1 zeigt ein Luftfahrzeug 2, das mehrere Rotoreinheiten 14 aufweist. Vorliegend ist das Luftfahrzeug 2 beispielhaft als VTOL-Luftfahrzeug ausgebildet, konkret als eVTOL-Flugzeug. Senkrecht startende und landende Luftfahrzeuge, z.B. Flugzeuge, werden regelmäßig als VTOL-Luftfahrzeuge bezeichnet, wobei sich die Abkürzung VTOL von "Vertical Take-Off and Landing", also Senkrechtstart und -landung, ableitet. VTOL-Luftfahrzeuge sind zu Senkrechtstart und -landung ausgebildet. Ein VTOL-Luftfahrzeug profitiert besonders von den Vorteilen der hierin beschriebenen elektrischen Antriebseinheiten. Das Luftfahrzeug 2 umfasst mehrere elektrische Antriebseinheiten 1 gemäß der nachstehend erläuterten Figur 3, alternativ oder zusätzlich gemäß der weiter unten erläuterten Figur 4.

Das Luftfahrzeug 2 umfasst einen Rumpf 20 mit Flügeln 21, an welchen jeweils vorn und hinten je zwei elektrische Antriebseinheiten 1 montiert sind. Zumindest einige der elektrischen Antriebseinheiten 1, z.B. die jeweils vorn montierten, sind schwenkbar ausgebildet, sodass zwischen einer vorwiegend Auftrieb erzeugenden Ausrichtung und einer vorwiegend Schub erzeugenden Ausrichtung gewechselt werden kann. Das Luftfahrzeug 2 umfasst ferner ein Cockpit 22.

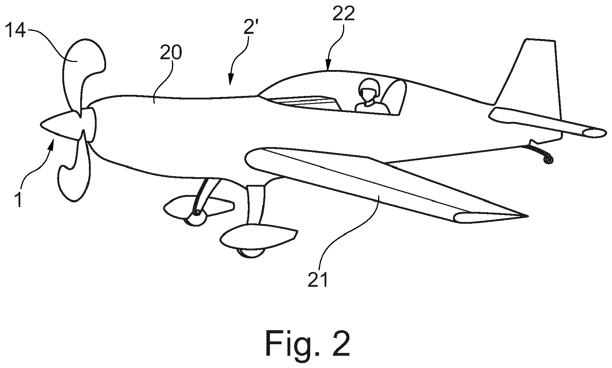

Figur 2 zeigt ein Luftfahrzeug 2' in Form eines elektrisch angetriebenen Flugzeugs mit einem Rumpf 20, Flügeln 21 und einem Cockpit 22.

Das Luftfahrzeug 2' umfasst eine elektrische Anordnung 1 mit einer Rotoreinheit 14, die durch einen Elektromotor angetrieben wird. Die Rotoreinheit 14 umfasst mehrere, hier exemplarisch zwei Rotorschaufeln. Die Rotorschaufeln sind im gezeigten Beispiel an einer Nabe montiert und bilden damit einen Propeller. In alternativen Ausgestaltungen umfasst das Luftfahrzeug 2` einen Fan anstelle eines Propellers und/oder mehrere elektrische Anordnungen mit jeweils zumindest einem Propeller oder Fan. Dies gilt analog für die elektrischen Antriebseinheiten 1 des Luftfahrzeugs 2 gemäß Figur 1.

Figur 3 zeigt eine elektrische Antriebsvorrichtung 1 des Luftfahrzeugs 2 gemäß Figur 1 und baugleich des Luftfahrzeugs 2' gemäß Figur 2. Die elektrische Antriebsvorrichtung 1 umfasst einen Elektromotor 10 zum Antrieb einer entsprechenden Rotoreinheit 14, ein Steuerungssystem 11 mit einem Speicher 110 und einem Prozessor 111 und einen Steckverbinder 12. Im Speicher 110 sind mindestens zwei verschiedene Konfigurationen gespeichert. Die Konfigurationen liegen also in Form von Software vor. Dabei ist das Steuerungssystem 11 dazu eingerichtet, eine Identifikation am Steckverbinder 12 auszulesen, basierend auf der Identifikation eine Konfiguration der mindestens zwei Konfigurationen auszuwählen und den Elektromotor 10 unter Anwendung der ausgewählten Konfiguration zu betreiben. Vorliegend ist das Steuerungssystem 11 auch dazu eingerichtet, einen Wechselrichter 15 der elektrischen Antriebseinheit 1 gemäß der ausgewählten Konfiguration einzustellen. Im vorliegenden Beispiel ist hierzu ein Computerprogramm im Speicher 110 gespeichert, welches, wenn es durch den Prozessor 111 ausgeführt wird, die vorstehend genannten Schritte durchführt.

Die Konfigurationen können in einer separaten Datei gespeichert sein, insbesondere einer sogenannten PDI-Datei (Parameter Data Item), unabhängig von einer Haupt-Software der elektrischen Antriebseinheit 1. Die Haupt-Software stellt die Funktionalität bereit, und eine oder mehrere PDIs können unabhängig davon (und voneinander) gespeichert und aktualisiert werden, so dass die Funktionalität der Haupt-Software nicht verändert werden muss, nur der entsprechende Parametersatz wird von der Haupt-Software ausgelesen und verwendet. Mehrere, insbesondere alle elektrische Antriebseinheiten 1 können dieselbe Haupt-Software aufweisen.

Die mindestens zwei Konfigurationen (z.B. drei, vier, fünf, zehn oder mehr Konfigurationen) umfassen jeweils Werte für einen oder mehrere Betriebsparameter, insbesondere für den Elektromotor 10 und für den Wechselrichter 15 der elektrischen Antriebsvorrichtung 1. Der Wechselrichter 15 stellt eine Wechselspannung an den Elektromotor 10 bereit. Insbesondere bezieht der Wechselrichter 15 eine Gleichspannung und wandelt diese in die Wechselspannung um.

Die Betriebsparameter umfassen eine Drehrichtung (in welcher der Elektromotor 10 rotieren soll, eine maximale Leistung des Elektromotors und/oder eine maximale Beschleunigung des Elektromotors, und einen Parameter eines Reglers, insbesondere eines PI-Reglers, insbesondere des Wechselrichters 15. Ferner können die Betriebsparameter einen Parameter einer einstellbaren Fläche umfassen, insbesondere in Bezug auf einen (z.B. maximalen) Anstellwinkel der Rotorblätter der Rotoreinheit 14. Ferner können die Betriebsparameter eine Kompensation von Herstellungstoleranzen umfassen. Die verschiedenen Konfigurationen umfassen im Vergleich miteinander voneinander verschiedene Werte für die Betriebsparameter.

Der Steckverbinder 12 ist mit einem Gegensteckverbinder 13A steckend verbindbar. Der Steckverbinder 12 weist mehrere Kontakte 120 auf, die durch Gegenkontakte 130 des Gegensteckverbinders 13A kontaktierbar sind.

Das Steuerungssystem 11 ist dazu ausgebildet, basierend auf an den Kontakten 120 des Steckverbinders 12 anliegenden Signalen, z.B. in Form von Spannungen und/oder basierend auf über die Kontakte 120 übertragenen Daten die Konfiguration der mindestens zwei Konfigurationen auszuwählen. Im Beispiel gemäß Figur 3 ist der Gegensteckverbinder 13A als einfacher Blindstecker ausgebildet und umfasst eine Brücke zwischen zwei Gegenkontakten 130. Hierbei ist z.B. auf einen der verbundenen Kontakte 120 des Steckverbinders 12 ein Potential gelegt, welches durch die Brücke an einen anderen Kontakt 120 des Steckverbinders 12 liegt. Indem der Gegensteckverbinder 13A an den Steckverbinder 12 gesteckt wird, kann das Steuerungssystem 11 somit eine Identifikation daran auslesen, an welchem Kontakt 120 das Potential liegt. Verschiedene Gegensteckverbinder 13A können eine Brücke zu einem jeweils anderen Gegenkontakt 130 und Kontakt 120 aufweisen. Je nachdem, mit welcher Brücke der Gegensteckverbinder 13A versehen ist, wählt das Steuerungssystem 11 dann eine in vorbestimmter Weise zugeordnete Konfiguration aus. In diesem Beispiel ist der Steckverbinder 12 dazu ausgebildet ist, den Gegensteckverbinder 13A mit einer Spannung und Strom zu versorgen.

Alternativ weist der Gegensteckverbinder 13A eine Spannungsversorgung auf und das Steuerungssystem 11 liest die Spannung am Steckverbinder 12 aus, um die Identifikation zu erfassen. Ferner kann mittels eines Übertragungsprotokolls oder dergleichen eine Identifikation in Form eines Datenpakets übermittelt werden, was mit einem kleinen Bauraumbedarf eine große Anzahl an verschiedenen Identifikationen ermöglicht.

Vorliegend weist das Luftfahrzeug 2 gemäß Figur 1 an jedem Einbauort einen für diesen Einbauort spezifischen Gegensteckverbinder 13A auf. So können mehrere (hier acht) baugleiche elektrische Antriebseinheiten 1 am Luftfahrzeug 2 montiert werden, wobei die Konfiguration der elektrischen Antriebseinheiten 1 in besonders einfacher Weise durch Einstecken der jeweiligen Gegensteckverbinder 13A erfolgt. Ebenso können baugleiche elektrische Antriebseinheiten an verschiedenen Luftfahrzeugen 2; 2' eingesetzt werden, wobei über den Gegensteckverbinder 13A die für das jeweilige Luftfahrzeug 2; 2` angepasste Konfiguration ausgewählt wird. Zusätzlich kann jede der elektrischen Antriebseinheiten 1 durch diesen Gegensteckverbinder 13A sich selbst und den jeweiligen Einbauort identifizieren und, optional, diese Identifikation bei einer Kommunikation mit einer Flugzeug-Hauptsteuerungseinheit oder einem Indikationspanel im Cockpit mitteilen, damit dort die gelieferten Daten der jeweiligen elektrischen Antriebseinheit 1 zugeordnet werden kann, z.B. bei Übertragung von Betriebsdaten, Warnungen und dergleichen.

Optional umfasst der Elektromotor 10 mehrere parallele und unabhängig voneinander mit Strom beaufschlagbare Stränge, auch als Lanes bezeichnet. Der Elektromotor 10 kann dann auch als Multi-Lane-Elektromotor bezeichnet werden. Jeder der Stränge weist Drahtwicklungen auf. Die mindestens zwei Konfigurationen weisen verschiedene Werte in Bezug auf die jeweiligen Stränge auf. So kann der Elektromotor 10 je nach Einbauort automatisch hinsichtlich des Betriebs der einzelnen Stränge konfiguriert werden. Beispielsweise kann an einer bestimmten Einbauposition ein Strang deaktiviert und als Reserve genutzt werden. Ferner ermöglichen es solche Multi-Wicklungssysteme, dass in vielen Fehlerfällen nur ein Teil der Motorleistung verloren geht und die übrige elektrische Antriebseinheit 1 weiter eine Teillast liefern kann.

Figur 4 zeigt in einer schematischen Schnittdarstellung einen Elektromotor 10 eines elektrischen Antriebssystems 1 für die Luftfahrzeuge 2; 2' gemäß Figur 1 und 2. Der Elektromotor ist konkret in Form einer permanenterregten Synchronmaschine ausgebildet, wobei die in Figur 4 gezeigte Ausgestaltung lediglich beispielhaft ist und auch anders ausgebildete Antriebsmotoren denkbar sind.

Aus Figur 4 ist ersichtlich, dass der Elektromotor vorliegend als Innenläufer ausgebildet ist; dies ist jedoch lediglich beispielhaft zu verstehen. Bei dem Elektromotor 10 kann es sich gleichermaßen um einen Außenläufer handeln. Der Elektromotor 10 umfasst einen Stator 100, der eine nicht bezeichnete Öffnung, insbesondere Durchgangsöffnung, aufweist, in der ein Rotor 101 drehbar gelagert angeordnet ist.

Der Stator 100 umfasst einen Körper, z.B. in Form eines Blechpakets, an welchem Statorzähne ausgebildet sind. Die Statorzähne stehen radial vom Körper ab, vorliegend radial nach innen. Der Stator 100 weist Statorwicklungen auf, die um mehrere der Statorzähne gewickelt sind. Die Statorwicklungen sind vorliegend für einen dreiphasigen Betrieb ausgebildet, das heißt, an eine dreiphasige Wechselspannung mit Phasen U, V, W angeschlossen. Im bestimmungsgemäßen Betrieb des Elektromotors 10 ist die Statorwicklung entsprechend mit der Wechselspannung beaufschlagt.

Der Rotor 101 ist vorliegend als Schenkelpolläufer ausgebildet, der zur Bereitstellung des magnetischen Flusses Permanentmagnete umfasst. In der vorliegenden Ausgestaltung ist vorgesehen, dass der Rotor 101 genau einen magnetischen Nordpol N und einen magnetischen Südpol S aufweist. Bei alternativen Ausgestaltungen können auch mehr magnetische Pole in Umfangsrichtung um eine Drehachse des Rotors 101 alternierend vorgesehen sein.

Der Rotor 101 ist drehbar gelagert. Durch die dreiphasige Wechselspannung, deren Phasen U, V, W um jeweils 120° phasenverschoben sind, wird im bestimmungsgemäßen Betrieb ein magnetisches Drehfeld erzeugt, welches mit dem durch den Rotor 101 bereitgestellten permanenterregten Magnetfeld zusammenwirkt, sodass in einem Motorbetrieb eine entsprechende Drehbewegung des Rotors 101 gegenüber dem Stator 100 herbeigeführt werden kann. Optional kann der Elektromotor 10 als Generator (zur Rekuperation) betreibbar sein. In Figur 4 sind schematisch die Abschnitte der Statorwicklungen dargestellt, die den jeweiligen Phasen U, V, W zugeordnet sind.

Die Statorwicklungen des Elektromotors sind in zwei parallele Stränge (Lanes) unterteilt und jeweils an einen von zwei, jeweils dreiphasig ausgebildete, voneinander unabhängige Wechselrichter 15 angeschlossen. Die Wechselrichter 15 stellen die elektrische Wechselspannung mit den drei Phasen U, V, W bereit. Die Wechselrichter 15 beziehen die für den bestimmungsgemäßen Betrieb erforderliche elektrische Energie aus jeweils einer an (nur) einen der beiden Wechselrichter 15 angeschlossenen Energiequelle 3. Die Energiequellen 3 sind elektrisch voneinander getrennt und unabhängig voneinander betreibbar. In der vorliegenden Ausgestaltung handelt es sich bei jeder der Energiequellen 3 um eine Gleichspannungsquelle, die elektrische Energie erzeugt und/oder speichert und vorliegend einen elektrischen Energiespeicher, beispielsweise einem Akkumulator, umfasst. Alternativ oder ergänzend können die Energiequellen jeweils Brennstoffzellen, eine Verbrennungsmaschine mit einem Generator und/oder dergleichen umfassen. Ferner könnte alternativ eine gemeinsame Energiequelle 3 für alle Wechselrichter 15 vorgesehen sein. Jeder Wechselrichter 15 umfasst (optional) einen Regler, der die Konfiguration des Wechselrichters 15 vom ihm zugeordneten Gegensteckverbinder 13A ausliest.

In Figur 4 ist ferner veranschaulicht, dass einer der Wechselrichter 15 mit den Statorwicklungen des ersten Strangs S1 elektrisch verbunden ist, und dass der andere Wechselrichter 15 mit den Statorwicklungen des zweiten Strangs S2 elektrisch verbunden ist. Die Statorwicklungen des ersten Strangs S1 und des zweiten Strangs S2 sind vorliegend jeweils gemeinsam um dieselben Statorzähne gewickelt.

Alternativ weist der Elektromotor mehr als zwei Stränge auf, z.B. drei oder vier Stränge, die jeweils durch andere (nicht dieselben) Wechselrichter mit Energie versorgt werden.

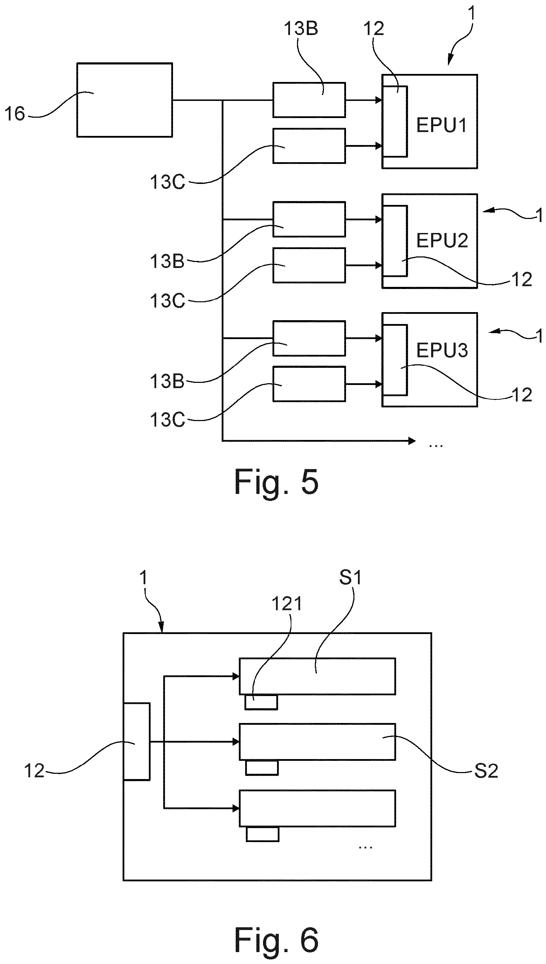

Figur 5 zeigt ein System mit mehreren elektrischen Antriebseinheiten 1 (beziffert als EPU 1, EPU 2 und EPU 3), die gemäß der elektrischen Antriebseinheit 1 nach Figur 3 oder gemäß der elektrischen Antriebseinheit 1' nach Figur 4 ausgebildet sein können. Jede elektrische Antriebseinheit 1 umfasst den Elektromotor 10 und so viele Wechselrichter wie Stränge im Elektromotor 10.

Dabei ist vorgesehen, dass mit dem Steckverbinder 12 jeder elektrischen Antriebseinheit 1 ein erster Gegensteckverbinder 13B und ein zweiter Gegensteckverbinder 13C verbindbar sind. Die ersten und zweiten Gegensteckverbinder 13B, 13C können wie gezeigt separat voneinander ausgebildet sein, alternativ dazu sind der erste und der zweite Gegensteckverbinder 13B, 13C jeweils in Form eines einzigen Gegensteckverbinders mit einem ersten Abschnitt und einem zweiten Abschnitt ausgebildet.

Der erste Gegensteckverbinder 13B ist jeweils so ausgebildet, wie bereits vorstehend beschrieben, z.B. als Blindstecker. Der zweite Gegensteckverbinder 13C jeder elektrischen Antriebseinheit 1 ist elektrisch und/oder kommunikativ mit einer Eingabevorrichtung 16 verbunden. Während der erste Gegensteckverbinder 13B jeweils vorkonfiguriert ist und eine Identifikation fest eingestellt umfasst, ist mittels der Eingabevorrichtung 16 über den zweiten Gegensteckverbinder 13C eine Identifikation einstellbar. Die Identifikation des zweiten Gegensteckverbinders 13C kann die Identifikation des ersten Steckverbinders 13B ergänzen.

Über den zweiten Gegensteckverbinder 13C kann also eine Lokalisierungsidentifikation eingegeben werden. Der zweite Gegensteckverbinder 13C ist also für den jeweiligen Einbauort spezifisch. Der erste Gegensteckverbinder 13B kann als gemeinsames Konfigurationsteil dienen, der z.B. zentral (insbesondere zusammen mit einem oder mehreren weiteren ersten Gegensteckverbindern 13B, insbesondere in gleicher Weise) eingestellt werden kann (z.B. durch einen Piloten oder durch einen übergeordneten Flugregler, oder fix für einen jeweiligen Flugzeugtyp oder eine jeweilige Flugzeugtypunterart).

Das Steuerungssystem 11 kann die ergänzte Identifikation in Form einer kombinierten Identifikation auslesen, basierend auf der kombinierten Identifikation eine Konfiguration der mindestens zwei Konfigurationen auswählen und den Elektromotor 10 unter Anwendung der ausgewählten Konfiguration betreiben. Wiederum sind die eigentlichen Konfigurationen im Speicher 110 vorab gespeichert, nur die Auswahl einer Konfiguration erfolgt mittels der Identifikation über den Steckverbinder 12. Über den Steckverbinder 12 werden also nicht die eigentlichen Parameterwerte übermittelt. Das ermöglicht eine Reduktion von möglichen Fehlerquellen, was insbesondere im Luftfahrtbereich von höchster Bedeutung ist.

Die Eingabevorrichtung 16 ist z.B. im Cockpit 22 des Luftfahrzeugs 2 angeordnet. So kann ein Pilot z.B. während des Flugs die Konfiguration der elektrischen Antriebseinheit 1 oder der elektrischen Antriebseinheiten 1 ändern. Alternativ oder zusätzlich kann vorgesehen sein, dass die Konfiguration mittels eines insbesondere nicht einstellbaren Gegensteckverbinders für den jeweiligen Flugzeugtyp (z.B. durch eine zentrale Stelle) fest eingestellt und nicht mehr während des Betriebs geändert wird, was es erlaubt, dass ein Flugzeughersteller sein Portfolio oder ein Luftfahrtunternehmen seine Flotte optimal gestalten kann.

Der Steckverbinder 12 kann z.B. zwei, drei, vier, fünf oder mehr Kontakte 120 (z.B. in Form von Pins) aufweisen. Optional ist (mindestens) ein Kontakt 120 des Steckverbinders 12 zur Paritätsprüfung vorgesehen, dieser kann als Paritätskontakt bezeichnet werden. Für ein Luftfahrzeug (z.B. das Luftfahrzeug 2) mit acht elektrischen Antriebseinheiten 1 können am Steckverbinder 12 drei Kontakte 120 zur Identifikation vorgesehen sein, sowie ein Paritätskontakt.

Figur 6 veranschaulicht, dass anhand der am Steckverbinder 12 anliegenden Identifikation mehrere, z.B. 2, 3 oder mehr Stränge S1, S2 des Elektromotors 10 individuell konfiguriert werden können. So können die einzelnen Stränge in besonders einfacher und sicherer Weise über die am Steckverbinder 12 eingebbare Identifikation konfiguriert werden. Optional ist für jeden Strang S1, S2 ein Kontakt 120 vorgesehen.

Optional ist für einen, mehrere oder, wie im gezeigten Beispiel, für jeden der Stränge S1, S2 des Elektromotors 10 ein separater Teil 121 des Steckverbinders 12 vorgesehen. Über jeden separaten Teil 121 ist eine für den jeweiligen Strang S1, S2 spezifische Konfiguration auswählbar. Die Teile 121 können gemeinsam steckbar oder beabstandet zueinander angeordnet sein. Hierdurch kann sich z.B. jeder Strang S1, S2 identifizieren. Diese Identifikation kann z.B. für eine Kommunikation über einen Kommunikationsbus oder ein Kommunikationsnetzwerk verwendet werden. Jeder Teil 121 kann einen oder mehrere Kontakte 120 umfassen, optional jeweils einen Paritätskontakt.

### Bezugszeichenliste

- 1; 1': elektrische Antriebseinheit
- 10: Elektromotor
- 100: Stator
- 101: Rotor
- 11: Steuerungssystem
- 110: Speicher
- 111: Prozessor
- 12: Steckverbinder
- 120: Kontakt
- 121: Teil
- 13A-13C: Gegensteckverbinder
- 130: Gegenkontakt
- 14: Rotoreinheit
- 15: Wechselrichter
- 16: Eingabevorrichtung
- 2; 2': Luftfahrzeug
- 20: Rumpf
- 21: Flügel
- 22: Cockpit
- 3: Energiequelle
- S1, S2: Strang

## Patentansprüche

1. Elektrische Antriebseinheit (1; 1') für ein Luftfahrzeug (2; 2'), umfassend:
- einen Elektromotor (10),
- ein Steuerungssystem (11) mit einem Speicher (110), in welchem mindestens zwei verschiedene Konfigurationen gespeichert sind, und
- einen Steckverbinder (12), der mit einem Gegensteckverbinder (13A-13C) verbindbar ist,
wobei das Steuerungssystem (11) dazu eingerichtet ist, eine Identifikation am Steckverbinder (12) auszulesen, basierend auf der Identifikation eine Konfiguration der mindestens zwei Konfigurationen auszuwählen und den Elektromotor (10) unter Anwendung der ausgewählten Konfiguration zu betreiben.

2. Elektrische Antriebseinheit (1; 1 `) nach Anspruch 1, wobei die mindestens zwei Konfigurationen jeweils Werte für einen oder mehrere Betriebsparameter umfassen.

3. Elektrische Antriebseinheit (1; 1') nach Anspruch 2, wobei die Betriebsparameter eine Drehrichtung, eine maximale Leistung, eine maximale Beschleunigung, einen Parameter eines Reglers und/oder einen Parameter einer einstellbaren Fläche umfassen.

4. Elektrische Antriebseinheit (1; 1') nach einem der vorhergehenden Ansprüche, ferner umfassend einen Wechselrichter (15), wobei das Steuerungssystem (11) dazu eingerichtet ist, den Wechselrichter (15) gemäß der ausgewählten Konfiguration einzustellen.

5. Elektrische Antriebseinheit (1; 1') nach einem der vorhergehenden Ansprüche, wobei der Elektromotor (10) mehrere parallele und unabhängig voneinander mit Strom beaufschlagbare Stränge mit Drahtwicklungen umfasst, wobei die mindestens zwei Konfigurationen verschiedene Werte in Bezug auf die jeweiligen Stränge umfassen.

6. Elektrische Antriebseinheit (1; 1') nach einem der vorhergehenden Ansprüche, wobei der Steckverbinder (12) dazu ausgebildet ist, den Gegensteckverbinder (13A-13C) mit Strom zu versorgen.

7. Elektrische Antriebseinheit (1; 1') nach einem der vorhergehenden Ansprüche, wobei der Steckverbinder (12) mehrere Kontakte (120) aufweist, die durch Gegenkontakte (130) des Gegensteckverbinders (13A-13C) kontaktierbar sind, wobei das Steuerungssystem (11) dazu ausgebildet ist, basierend auf an den Kontakten (120) des Steckverbinders (12) anliegenden Spannungen und/oder basierend auf über die Kontakte (120) übertragenen Daten die Konfiguration der mindestens zwei Konfigurationen auszuwählen.

8. Elektrische Antriebseinheit (1; 1') nach einem der vorhergehenden Ansprüche, ferner umfassend den Gegensteckverbinder (13A-13C).

9. Elektrische Antriebseinheit (1; 1') nach Anspruch 8, wobei der Gegensteckverbinder (13A-13C) eine Einbauposition angibt.

10. Elektrische Antriebseinheit (1; 1') nach Anspruch 8 oder 9, wobei der Gegensteckverbinder (13A-13C) miteinander elektrisch verbundene Gegenkontakte (130) aufweist.

11. Elektrische Antriebseinheit (1; 1') nach einem der Ansprüche 8 bis 10, wobei der Gegensteckverbinder (13A-13C) zum Eingeben einer Identifikation an den Steckverbinder (12) mit einer Eingabevorrichtung (16) gekoppelt ist.

12. System, umfassend mehrere baugleiche elektrische Antriebseinheiten (1; 1'), jeweils nach einem der vorhergehenden Ansprüche, wobei die elektrischen Antriebseinheiten (1; 1') in Abhängigkeit von ihren jeweiligen Einbaupositionen mittels entsprechenden Gegensteckverbindern (13A-13C) konfiguriert sind.

13. Luftfahrzeug (2; 2'), umfassend die elektrische Antriebseinheit (1; 1') nach einem der Ansprüche 1-11 und/oder das System nach Anspruch 12.

14. Luftfahrzeug (2; 2') nach Anspruch 13, wobei der Gegensteckverbinder (13A-13C) zum Eingeben einer Identifikation an den Steckverbinder (12) mit einer in einem Cockpit (22) des Luftfahrzeugs (2; 2') angeordneten Eingabevorrichtung (16) elektrisch verbunden ist.

15. Luftfahrzeug (2; 2') nach Anspruch 14, umfassend mehrere elektrische Antriebseinheiten (1; 1'), jeweils nach einem der Ansprüche 1-11.
